# EUROPÄISCHE PATENTANMELDUNG

(11) **EP 4 544 968 A1**
(43) Veröffentlichungstag der Anmeldung: **30.04.2025**
(21) Anmeldenummer: 23205116.9
(22) Anmeldetag: 23.10.2023
(51) Int. Cl.: A47J 37/07

(54) **DOPPELWANDIGE GRILLVORRICHTUNG**

(71) Anmelder: Burnhard GmbH, 40589 Düsseldorf (DE)
(72) Erfinder: RUHFUS, Max, 40589 Düsseldorf (DE); ROTH, Maximilian, 40589 Düsseldorf (DE); STROHFELD, Niklas, 40589 Düsseldorf (DE); ZHANG, Weiyi, 40589 Düsseldorf (DE)
(74) Vertreter: dompatent von Kreisler Selting Werner - Partnerschaft von Patent- und Rechtsanwälten mbB

(57) **Zusammenfassung**

Doppelwandige Grillvorrichtung mit:
- einer nach oben geöffneten wannenförmigen äußeren Gehäusekammer; und
- einer nach oben geöffneten wannenförmigen inneren Grillkammer;

wobei die innere Grillkammer zur Aufnahme mindestens einer Brennervorrichtung ausgestaltet und die innere Grillkammer zur Anordnung innerhalb der äußeren Gehäusekammer ausgebildet ist; und
wobei bei Anordnung der inneren Grillkammer innerhalb der äußeren Gehäusekammer mindestens ein erster, mit Luft durchströmbarer, Zwischenraum zwischen der inneren Grillkammer und der äußeren Gehäusekammer ausgebildet ist.

## Beschreibung

Die vorliegende Erfindung betrifft eine doppelwandige Grillvorrichtung zur Zubereitung.

Aus dem Stand der Technik ist bereits eine Vielzahl von Grillvorrichtungen bekannt geworden, die üblicherweise eine Grillkammer, ein Gehäuse und eine Brennervorrichtung aufweisen. Dabei umgibt das Gehäuse die Grillkammer, grenzt dabei einerseits einen Grillbereich in der Grillkammer gegenüber der Umgebung räumlich ab und schützt andererseits die in der Grillkammer angeordneten Speisen, auch als Grillgut bezeichnet, vor Umgebungseinflüssen.

Die Brennervorrichtung ist dabei innerhalb der Grillkammer angeordnet und erzeugt beispielsweise über die Verbrennung eines Gases einen Verbrennungsprozess, so dass innerhalb der Grillkammer eine ausreichend hohe Temperatur erzeugt wird, um das Grillgut zu erhitzen. Die dabei durch die Brennervorrichtung erzeugten Temperaturen übersteigen in der Regel mehrere 100° C, so dass neben dem Inneren der Grillkammer auch die Wandungen des Gehäuses der aus dem Stand der Technik bekannten Grillvorrichtungen stark erhitzt werden. Dabei besteht gemäß Stand der Technik der Nachteil, dass ein Großteil der über die Brennervorrichtung eingebrachten thermischen Energie über die Wandungen der Grillvorrichtung verloren gehen, wodurch der Grillvorgang energetisch ineffizient ausgestaltet ist und wodurch ein erhöhter Gasverbrauch bedingt wird. Die vorliegende Erfindung soll nicht auf den Bereich von gasbetriebenen Brennervorrichtungen beschränkt sein, vielmehr können die Brennervorrichtungen beispielsweise auch mittels elektrischer Energie oder alternativ durch den Einsatz von weiteren Brennstoffen wie Holz oder Kohle für eine Erhitzung der Grillkammer vorgesehen werden.

Ein weiterer Nachteil der Grillvorrichtungen aus dem Stand der Technik besteht in einer umständlichen und aufwendigen Reinigungsfähigkeit. So weisen die Grillvorrichtungen aus dem Stand der Technik beispielsweise überwiegend eine stoffschlüssig gefügte oder mittels einer Vielzahl von Schrauben oder Nieten kraftschlüssig gefügte Grillkammer auf, wobei einzelne Bereiche der Grillkammer zu Reinigungszwecken für einen Benutzer nur unter erhöhtem Aufwand oder gar nicht zugänglich bzw. trennbar oder entfernbar sind. Eine vollständige und hygienische Reinigung der Grillkammern aus dem Stand der Technik ist daher nicht oder nur unter hohem Aufwand möglich. Ferner ist es durch die aufwendig gefügten Grillkammern nicht, oder nur unter erhöhtem Aufwand, möglich, einzelne Bereiche oder Elemente beispielsweise zu Wartungszwecken auszutauschen. Somit kann ein Benutzer beispielsweise eine in einem Bereich durch intensive Nutzung beschädigte Grillkammer nicht ohne Weiteres Austauschen und ist daher dazu angehalten eine komplett neue Grillvorrichtung zu erwerben. Die Grillvorrichtungen aus dem Stand der Technik sind daher nur in geringem Maße nachhaltig.

Ausgehend von den beschriebenen Nachteilen der aus dem Stand der Technik bekannten Grillvorrichtungen ist es daher die Aufgabe der vorliegenden Erfindung, eine doppelwandige Grillvorrichtung bereitzustellen, die über eine gesteigerte Effizienz verfügt, hierbei insbesondere die durch die Brennervorrichtung erzeugte Wärmeenergie effektiver nutzt und die derartig konstruiert ist, dass einzelne Bauteile zu Reinigungs- und/oder Wartungszwecken ohne großen Aufwand ausgetauscht werden können.

Gemäß einem ersten Aspekt betrifft die vorliegende Erfindung ein doppelwandige Grillvorrichtung.

Die erfindungsgemäße doppelwandige Grillvorrichtung umfasst:
- eine nach oben geöffnete wannenförmige äußere Gehäusekammer, und
- eine nach oben geöffnete wannenförmige innere Grillkammer,

wobei die innere Grillkammer zur Aufnahme mindestens einer Brennervorrichtung ausgestaltet und die innere Grillkammer zur Anordnung innerhalb der äußeren Gehäusekammer ausgebildet ist, und
wobei bei Anordnung der inneren Grillkammer innerhalb der äußeren Gehäusekammer mindestens ein erster mit Luft durchströmbarer Zwischenraum zwischen der inneren Grillkammer und der äußeren Gehäusekammer ausgebildet ist.

Die erfindungsgemäße doppelwandige Grillvorrichtung weist eine nach oben geöffnete wannenförmige äußere Gehäusekammer auf. Dabei kann die wannenförmige äußere Gehäusekammer beispielsweise halbkugelförmig, beckenförmig oder schalenförmig ausgebildet sein. Die Gehäusekammer kann somit auch lediglich im Bereich von spezifischen Einzelteilen eine bogenförmige Verlaufsform aufweisen. Die vorbezeichneten Ausgestaltungsformen weisen den Vorteil auf, dass die entsprechend ausgestaltete Gehäusekammer auch an runde Teile einer Grillvorrichtung, wie beispielsweise einem Kugelgrill oder Kamado Grill angepasst und darin vorgesehen werden kann. Die erfindungsgemäße doppelwandige Grillkammer ist folglich nicht nur auf rechteckige Ausführungsformen von Grillkammern beschränkt.

Gleiches gilt analog für die nach oben geöffnete wannenförmige innere Grillkammer, so dass die wannenförmige äußere Gehäusekammer und die wannenförmige innere Grillkammer bevorzugt eine gleiche oder zumindest ähnliche Form aufweisen.

Die innere Grillkammer ist zur Aufnahme mindestens einer Brennervorrichtung ausgestaltet, so dass die Brennervorrichtung bevorzugt in oder an der inneren Grillkammer lagerbar und gegenüber dieser festlegbar ist. Die Brennervorrichtung kann im Rahmen der Erfindung beispielsweise als ein Keramikbrenner, ein Wok-Brenner, ein Infrarotbrenner oder ein Gasbrenner ausgestaltet sein. Selbstverständlich kann die innere Grillkammer auch zur Aufnahme mehrerer Brennervorrichtungen ausgestaltet sein, wobei sich die Brennervorrichtungen voneinander unterscheiden.

Da die innere Grillkammer zur Anordnung innerhalb der äußeren Gehäusekammer ausgebildet ist, ist die mindestens eine Brennervorrichtung bevorzugt ebenfalls innerhalb der äußeren Gehäusekammer angeordnet. Mit anderen Worten: Die äußere Gehäusekammer umgibt vollständig die innere Grillkammer und bevorzugt die mindestens eine Brennervorrichtung.

Erfindungsgemäß ist bei der Anordnung der inneren Grillkammer innerhalb der äußeren Gehäusekammer mindestens ein erster mit Luft durchströmter Zwischenraum zwischen der inneren Grillkammer und der äußeren Gehäusekammer ausgebildet. Unter Durchströmung des Zwischenraums kann im Rahmen der Erfindung auch das Zirkulieren von Luftmassen innerhalb des Zwischenraums verstanden werden.

Befindet sich die doppelwandige Grillvorrichtung im Betrieb, so dass die mindestens eine Brennervorrichtung einen Verbrennungsvorgang vollzieht, können Temperaturen von mehreren 100° C innerhalb der nach oben geöffneten wannenförmigen inneren Grillkammer erzeugt werden. Die hohen Temperaturen, die von der Brennervorrichtung ausgehend in Richtung innere Grillkammer übertragen werden, führen zu einer Erwärmung der wannenförmigen inneren Grillkammer. Da zwischen der inneren Grillkammer und der äußeren Gehäusekammer erfindungsgemäß der erste mit Luft durchströmbare Zwischenraum ausgebildet ist, fungiert dieser Zwischenraum als Isolator, so dass die Temperatur von der inneren Grillkammer nur in geringem Maße an die äußere Gehäusekammer übertragen wird.

Der Isolationsvorgang beruht auf der Tatsache, dass Luft, oder auch Gas, einen schlechten Wärmeleiter darstellt. Das heißt, dass die zwischen der äußeren Gehäusekammer und der inneren Grillkammer eingeschlossene oder durchströmende Luft einen vergleichsweise geringen Wärmetransport ermöglicht.

Da der Zwischenraum mit Luft durchströmbar ist, kann die durch die innere Grillkammer erwärmte Luft zwischen der inneren Grillkammer und der äußeren Grillkammer weiterhin vorteilhaft von einem Luftstrom abtransportiert werden. Mit anderen Worten: Der erste mit Luft durchströmbare Zwischenraum transportiert die Wärme zwischen der inneren Grillkammer und der äußeren Gehäusekammer in vorteilhafter Weise ab, so dass die äußere Gehäusekammer eine bevorzugt niedrige Temperatur aufweist. Die vorteilhaft niedrige Temperatur der äußeren Gehäusekammer wird jedoch auch gewährleistet, wenn Luft lediglich innerhalb des Zwischenraums zirkuliert oder in diesem angeordnet ist, da die Luft als natürlicher Isolator fungiert. Die Zuführung von gegenüber der in dem Zwischenraum vorliegenden erwärmten Luft von Kaltluft aus der Umgebung der Grillkammer bewirkt weiterhin eine reduzierte Erwärmung der äußeren Gehäusekammer.

Durch die vergleichsweise deutlich kältere äußere Gehäusekammer kann die doppelwandige Grillvorrichtung im Betrieb in vorteilhafter Weise problemlos an temperaturempfindlichen Bereichen positioniert werden, wie beispielsweise in direkter Nähe einer Hauswand. Ferner wird durch den mit Luft durchströmbaren Zwischenraum zwischen der inneren Grillkammer und der äußeren Gehäusekammer die Wärmeenergie, die von der Brennervorrichtung emittiert wird, bevorzugt innerhalb der inneren Grillkammer gehalten, so dass die erfindungsgemäße doppelwandige Grillvorrichtung besonders energieeffizient ausgestaltet ist. Darüber besteht durch die vergleichsweise deutlich kältere äußere Gehäusekammer nahezu kein Verbrennungsrisiko für den Benutzer, wenn dieser in Kontakt mit der äußeren Gehäusekammer kommt. Die erfindungsgemäße doppelwandige Grillvorrichtung ist somit besonders sicher, beispielsweise wenn Kinder in einem unbeobachtetem Moment unbedacht oder aus Versehen die äußere Gehäusekammer berühren.

In einer bevorzugten Ausführungsform ist vorgesehen, dass die äußere Gehäusekammer mindestens ein äußeres Seitenelement und mindestens ein äußeres Bodenelement umfasst und/oder, dass die innere Grillkammer mindestens ein inneres Seitenelement und mindestens ein inneres Bodenelement umfasst. Das mindestens eine äußere Seitenelement und das mindestens eine äußere Bodenelement können dabei ebenso formschlüssig miteinander verbunden sein wie das mindestens eine innere Seitenelement und das mindestens eine innere Bodenelement. Dadurch, dass die äußere Gehäusekammer und die innere Grillkammer über die vorgenannten Elemente verfügen, können diese auf einfache Art und Weise ausgetauscht werden. Somit kann beispielsweise ein inneres Bodenelement vorteilhaft gereinigt werden, ohne dass es einer Reinigung der gesamten Grillvorrichtung bedarf. Beispielsweise kann das innere Bodenelement manuell oder mittels einer Spülmaschine benutzerfreundlich gereinigt werden.

Darüber hinaus kann die erfindungsgemäße Grillvorrichtung, wobei die äußere Gehäusekammer und die innere Grillkammer über mehrere Elemente verfügen, besonders vorteilhaft montiert bzw. demontiert werden, so dass etwa zu Lagerungs- und/oder Transportzwecken die doppelwandige Grillvorrichtung besonders platzsparend verstaut werden kann.

Vorzugsweise ist vorgesehen, dass das äußere Seitenelement mit dem äußeren Bodenelement verbindbar ist und/oder dass das innere Seitenelement mit dem inneren Bodenelement verbindbar ist. Unter dem Ausdruck "verbindbar" wird im Rahmen der vorliegenden Erfindung die Möglichkeit verstanden, unterschiedliche Elemente formschlüssig und/oder kraftschlüssig miteinander zu verbinden.

Beispielsweise können das äußere Seitenelement und das äußere Bodenelement über eine Steckverbindung miteinander verbindbar sein. In diesem Fall kann das äußere Seitenelement beispielsweise Vorsprünge aufweisen, die in Öffnungen des äußeren Bodenelement hineinragen und somit eine formschlüssige Verbindung ergeben. Selbstverständlich kann eine derartige Steckverbindung auch zwischen dem inneren Seitenelement und dem inneren Bodenelement vorliegen. Zusätzlich oder alternativ kann die Verbindung auch unter Verwendung von Stiften, Pins und/oder Bolzen erfolgen. Dadurch, dass das äußere Seitenelement mit dem äu-ßeren Bodenelement und/oder das innere Seitenelement mit dem inneren Bodenelement verbindbar ist, kann die erfindungsgemäße doppelwandige Grillvorrichtung besonders einfach montiert bzw. demontiert werden, beispielsweise zu Reinigungs-, Wartungs-, und/oder Lagerungszwecken.

In einer bevorzugten Ausführungsform ist vorgesehen, dass die äußere Gehäusekammer mindestens einen Lüftungseinlass zur Zuführung von Kaltluft in den ersten Zwischenraum aufweist. Der mindestens eine Lüftungseinlass zur Zuführung von Kaltluft ist dabei bevorzugt in einem unteren oder einem mittleren Bereich der Grillkammer angeordnet. Durch eine derartige Anordnung kann der einströmende Kaltluftstrom Wärmeenergie, die vom Inneren der Grillkammer emittiert wird, aufnehmen und anschließend in Richtung eines oberen Bereiches der Gehäusekammer transportieren. Die erwärmte Kaltluft strömt oder zirkuliert somit durch den Zwischenraum. Durch die Anordnung des Lüftungseinlasses unterhalb eines Bereiches zur Wärmeabfuhr kann vorteilhaft eine Art Kamineffekt im Zwischenraum zur Zufuhr von die Außenkammer umgebende Kaltluft und Abfuhr von in dem Zwischenraum vorliegender erwärmten Luft etabliert werden. Die zugeführte Kaltluft ist dabei bevorzugt Umgebungsluft, so dass eine Durchströmung des Zwischenraums mittels zugeführter Umgebungsluft erfolgt. Durch den mindestens einen Lüftungseinlass in der äußeren Gehäusekammer wird ein Abtransport bzw. eine Zirkulation der in dem Zwischenraum erwärmten Luft ermöglicht, sodass die äußere Gehäusekammer in vorteilhafter Weise durch die zugeführte Kaltluft gekühlt wird. Die äußere Gehäusekammer verfügt somit über eine vergleichsweise deutlich niedrigere Temperatur als die innere Grillkammer.

Optional ist vorgesehen, dass der mindestens eine Lüftungseinlass als Lufthutze ausgebildet ist. Die Lufthutze stellt dabei einen Lüftungseinlass dar, der über Vorsprünge verfügt, über die ein Kaltluftstrom in das Innere der äußeren Gehäusekammer geleitet werden kann. Über die Vorsprünge wird vergleichsweise mehr Umgebungsluft erfasst, sodass durch den mindestens einen als Lufthutze ausgebildeten Lüftungseinlass der einströmende Kaltluftstrom besonders vorteilhaft in den Zwischenraum zwischen äußerer Gehäusekammer und innerer Grillkammer geleitet wird. Mittels des als Lufthutze ausgebildeten Lufteinlass wird die äußere Gehäusekammer somit besonders vorteilhaft gekühlt. Die Lufthutze weist weiterhin den Vorteil auf, dass durch die Vorsehung des Vorsprungs ein direkter Luftstrom auf geradem Wege über den Lufteinlass verhindert wird, da der Luftstrom durch die Ausbildung der Hutze umgeleitet werden muss, um durch den Lufteinlass in den Zwischenraum einströmen zu können.

In einer bevorzugten Ausführungsform ist vorgesehen, dass die äußere Gehäusekammer an dem äußeren Bodenelement und/oder die innere Grillkammer an dem inneren Bodenelement mindestens eine Öffnung, insbesondere mindestens eine Auslassöffnung, aufweisen. Dabei kann die mindestens eine Auslassöffnung bevorzugt als eine Abflussöffnung ausgestaltet sein, sodass beispielsweise Feuchtigkeit oder flüssige Rückstände, die während eines Grillvorgangs entstehen, aus der inneren Grillkammer und/oder der äußeren Gehäusekammer herausfließen können. Die Feuchtigkeit kann beispielsweise eine Reinigungsflüssigkeit, die zu Reinigungszwecken in die Grillvorrichtung eingeleitet wurde, sein und ein flüssiges Fett, das sich während eines Grillvorgangs in der Grillvorrichtung angesammelt hat, kann beispielsweise als ein liquider Rückstand angesehen werden. Derartige Rückstände oder Flüssigkeiten können anschließend an dem inneren Bodenelement der inneren Grillkammer angesammelt werden und durch die mindestens eine Auslassöffnung herausgeleitet werden und/oder sich an der äußeren Gehäusekammer ansammeln und über die Auslassöffnung in dem äußeren Bodenelement aus der Grillvorrichtung herausfließen. Die Rückstände können somit besonders vorteilhaft abfließen, so dass keine unerwünschten Rückstände innerhalb der inneren Grillkammer und/oder innerhalb der äußeren Gehäusekammer der Grillvorrichtung angesammelt werden. Durch die Abführung des flüssigen Fettes aus der inneren Grillkammer wird weiterhin auf vorteilhafte Weise ein möglicher Fettbrand verhindert. Die erfindungsgemäße Grillvorrichtung wird somit auch bei intensiver Nutzung besonders vorteilhaft reingehalten.

Optional ist vorgesehen, dass unterhalb der mindestens einen Auslassöffnung ein Behälter anordenbar ist, wobei der Behälter bevorzugt als Fettschublade ausgebildet werden kann. Die Rückstände, wie beispielsweise flüssiges Fett, die aus der Auslassöffnung während oder nach einem Grillvorgang fließen, werden somit in dem ausgestalteten Behälter gesammelt. Dabei kann der ausgestaltete Behälter durch eine formschlüssige Verbindung, etwa durch eine Art Bajonettverschluss, unterhalb der mindestens einen Auslassöffnung angeordnet und über eine Schienenführung verschiebbar gelagert werden. Das während eines Grillvorgangs abgeschiedene unerwünschte Fett oder weitere Grillrückstände können somit vorteilhaft in dem als Fettschublade ausgestalteten Behälter gesammelt und entsorgt werden.

In einer bevorzugten Ausführungsform ist vorgesehen, dass das innere Seitenelement und/oder das innere Bodenelement mehrere Wandelemente aufweisen/aufweist, über die die innere Grillkammer in der äußeren Gehäusekammer beabstandet lagerbar ist. Durch die mehreren Wandelemente wird ein definierter Abstand zwischen der inneren Grillkammer und der äußeren Gehäusekammer geschaffen, so dass der mindestens eine durchströmbare Zwischenraum definiert ausgebildet wird. Dabei kann über die Dimensionierung der mehreren Wandelemente die räumliche Ausdehnung und Form des durchströmbaren Zwischenraums eingestellt werden, so dass das Strömungsverhalten der Luft, die durch den durchströmbaren Zwischenraum strömt, beeinflusst werden kann. Beispielsweise kann über die mehreren Wandelemente der durchströmbare Zwischenraum zwischen innerer Grillkammer und äußerer Gehäusekammer in Bereichen erhöhter Temperatur dahingehend angepasst werden, dass die an den Bereichen erhöhter Temperatur vorbeiströmende Luft derartig strömt, dass die von den Bereichen mit erhöhter Temperatur abgehende Wärmeenergie durch das beeinflusste Strömungsverhalten bevorzugt abtransportiert wird. Durch die mehreren Wandelemente kann somit auf vorteilhafte Art und Weise das Strömungsverhalten der Luft, die durch den durchströmbaren Zwischenraum strömt, beeinflusst werden. Der erste, mit Luft durchströmbare, Zwischenraum ist durch die mehreren Wandelemente somit besonderes energieeffizient ausgestaltet.

Bevorzugt kann es vorgesehen werden dass an der inneren Grillkammer und/oder an der äußeren Gehäusekammer in den Zwischenraum vorstehenden Luftleitbleche angeordnet werden um somit bevorzugt einen Luftstrom innerhalb des Zwischenraums zu leiten.

Optional ist vorgesehen, dass die innere Grillkammer und/oder die mehreren Seitenelemente der inneren Grillkammer und/oder das innere Bodenelement über Führungselemente mit der äußeren Gehäusekammer verbindbar sind. Derartige Führungselemente können beispielsweise Vorsprünge, Führungsstifte und/oder Führungsschienen sein, die an der inneren Grillkammer und/oder an der äußeren Gehäusekammer angeordnet sind. Durch die Führungselemente wird die innere Grillkammer derartig mit der äußeren Gehäusekammer verbunden, dass die innere Grillkammer nahezu spielfrei innerhalb der äußeren Gehäusekammer angeordnet ist. Dabei kann die Verbindung über die Führungselemente bevorzugt formschlüssig erfolgen, so dass die innere Grillkammer besonders einfach von der äußeren Gehäusekammer lösbar ist. Folglich können die innere Grillkammer und die äußere Gehäusekammer besonders einfach beispielsweise zu Reinigungs- und/oder Wartungszwecken voneinander getrennt werden.

In einer bevorzugten Ausführungsform ist vorgesehen, dass die äußere Gehäusekammer und/oder die innere Grillkammer einen in vertikaler Richtung nach oben größer werdenden Grillkammerraum umschließen. Der Ausdruck "nach oben" ist im Rahmen der Erfindung als die Richtung entgegen der Schwerkraft zu verstehen, wohingegen der Ausdruck "nach unten" als in Richtung der Schwerkraft zu verstehen ist. Durch einen in vertikaler Richtung nach oben größer werdenden Grillkammerraum sind einzelne Wandungen der Gehäusekammer und/oder der Grillkammer nicht senkrecht zur Horizontalen ausgerichtet, sodass während eines Grillvorgangs anfallende Fett und/oder weitere Flüssigkeiten in Richtung der Schwerkraft, also nach unten, in den Grillkammerraum fließen können. Der nach oben größer werdende Grillkammerraum ist somit besonders vorteilhaft für das Abfließen von Fett und/oder anderen Flüssigkeiten geeignet, so dass bei der erfindungsgemäßen doppelwandige Grillvorrichtung in vorteilhafter Weise unerwünschte Fett- und/oder Flüssigkeitsansammlungen reduziert werden. Ein dauerhaftes Verbleiben von Fett- und/oder Flüssigkeitsansammlungen, welche unter Hitzeeinwirkung der Brennereinrichtung antrocknen oder gar sich thermisch zersetzen wird durch die vorgesehene Ausführungsform verhindert.

Vorzugsweise ist vorgesehen, dass an der äußeren Gehäusekammer mindestens ein Isolierteil angeordnet ist, wobei zwischen dem mindestens einen Isolierteil und der äußeren Gehäusekammer mindestens ein zweiter mit Luft durchströmbarer Zwischenraum ausgebildet ist. Das mindestens eine Isolierteil und die äußere Gehäusekammer umschließen somit mindestens einen zweiten mit Luft durchströmbaren Zwischenraum, so dass das Isolierteil eine weitere Wandung darstellt. Durch den zweiten mit Luft durchströmbaren Zwischenraum verfügt die doppelwandige Grillvorrichtung somit über eine weitere thermische Isolierung, so dass die äußere Gehäusekammer zusätzlich von der inneren Grillkammer thermisch isoliert wird. Durch das mindestens eine weitere Isolierteil wird eine Erwärmung der äußeren Gehäusekammer somit besonders vorteilhaft verringert.

Optional ist vorgesehen, dass das mindestens eine Isolierteil Lüftungselemente zur zusätzlichen Zuführung von Kaltluft in den mindestens einen zweiten Zwischenraum aufweist. Durch die Lüftungselemente wird somit der mindestens eine zweite Zwischenraum mit Kaltluft bzw. Umgebungsluft versorgt, so dass ein Austausch zwischen frischer, von außen zuströmender, Kaltluft und durch den Grillvorgang erwärmte Luft in dem zweiten Zwischenraum gewährleistet ist. Dabei können die Lüftungselemente als Lufthutzen, Schlitze oder Öffnungen ausgestaltet sein. Über die Lüftungselemente wird der mindestens eine zweite Zwischenraum somit besonders vorteilhaft mit frischer Kaltluft versorgt und verringert die Erwärmung der äußeren Gehäusekammer.

Vorzugsweise ist vorgesehen, dass das innere Bodenelement von einem Mittelbereich in Richtung des inneren Seitenelements ansteigend angeordnet ist und/oder das äußere Bodenelement von einem Mittelbereich in Richtung des äußeren Seitenelements ansteigend angeordnet ist. Das innere Bodenelement und/oder das äußere Bodenelement sind somit nach unten geneigt angeordnet. Die äußere Gehäusekammer, die das mindestens eine äußere Bodenelement umfasst und die innere Grillkammer, die das mindestens eine innere Bodenelement umfasst, sind somit trichterförmig ausgestaltet. Die von einem Mittelbereich ansteigende Anordnung des inneren Bodenelements und/oder des äußeren Bodenelements bewirkt, dass Ablagerungen und/oder Feuchtigkeit und/oder Fettrückstände, die während des Grillvorgangs entstehen und die sich an einem inneren Seitenelement, an dem inneren Bodenelement und/oder an dem äußeren Seitenelement und dem äußeren Bodenelement ansammeln oder ablagern, durch die Neigung in Richtung Mittelbereich fließen. Ferner kann während eines Reinigungsprozesses der doppelwandigen Grillvorrichtung eine Reinigungslotion von dem inneren Seitenelement und/oder dem äußeren Seitenelement durch die Neigung über das innere Bodenelement und/oder das äußere Bodenelement in Richtung Mittelbereich fließen, so dass die doppelwandige Grillvorrichtung besonders einfach zu reinigen ist. Ferner fließen auch unerwünschte Rückstände des Grillvorgangs vorteilhaft durch die Neigung in Richtung Mittelbereich, so dass eine unerwünschte Ansammlung von Rückstände des Grillvorgangs in einem ungeneigten Bereich vorteilhaft vermieden wird.

In einer bevorzugten Ausführungsform ist vorgesehen, dass die innere Grillkammer mindestens eine erste Aussparung zur Festlegung und mindestens eine erste Öffnung zur schwimmenden Lagerung mindestens einer Brennervorrichtung aufweist, wobei die mindestens eine erste Aussparung und die mindestens eine erste Öffnung gegenüberliegend angeordnet sind. Dabei kann die mindestens eine erste Aussparung zur Festlegung der Brennervorrichtung an einer dem Benutzer abgewandten Seite der Grillvorrichtung angeordnet sein, und die mindestens eine erste Öffnung zur schwimmenden Lagerung kann bevorzugt an einer dem Benutzer zugewandten Seite der Grillvorrichtung angeordnet sein. Da die mindestens eine Brennervorrichtung schwimmend gelagert ist, ist diese einerseits radial stabil in der Grillvorrichtung angeordnet und andererseits mit einem ausreichenden axialen Spiel angeordnet, so dass die Brennervorrichtung auch durch eine werkstoffbedingte Ausdehnung bei höheren Temperaturen nicht in der Grillvorrichtung verspannt. Ferner kann die Brennervorrichtung durch die Aussparung auf besonders einfache Art und Weise aus der Grillvorrichtung entnommen werden, beispielsweise zur Reinigungs- und/oder Wartungszwecken.

Vorzugsweise ist vorgesehen, dass die äußere Gehäusekammer mindestens eine zweite Öffnung aufweist, wobei bevorzugt die mindestens eine zweite Öffnung an die mindestens eine erste Öffnung zur schwimmenden Lagerung der mindestens einen Brennervorrichtung der inneren Wandung angepasst ist. Durch die zweite Öffnung in der äußeren Gehäusekammer kann die mindestens eine Brennerkammer, die schwimmend in der ersten Öffnung der inneren Wandung gelagert ist, durch die erste und die zweite Öffnung geführt werden. Die mindestens eine Brennervorrichtung kann somit einerseits besonders einfach in die doppelwandige Grillvorrichtung integriert werden und andererseits auf besonders einfache Art und Weise von einem Benutzer von außerhalb der äußeren Gehäusekammer bedient werden. Die Bedienung der Brennervorrichtung kann dabei beispielsweise über einen Regler erfolgen, der ebenfalls an der mindestens einen zweiten Öffnung und/oder an der aus der zweiten Öffnung herausragenden Brennervorrichtung angeordnet sein kann. Ferner hat sich die Anpassung der zweiten Öffnung der äußeren Gehäusekammer an die erste Öffnung der inneren Wandung der inneren Grillkammer als optisch besonders ansehnlich herausgestellt.

Optional ist vorgesehen, dass die innere Grillkammer mindestens eine zweite Aussparung und/oder ein Halteelement zur Aufnahme einer Flammenabschirmeinrichtung aufweist. Dabei können die zweite Aussparung und/oder das Halteelement an gegenüberliegenden Seitenelementen der inneren Grillkammer ausgebildet werden. Die Flammenabschirmeinrichtung kann dabei auch als eine Aromaschiene ausgebildet sein, die oberhalb der Brennervorrichtung angeordnet und beispielsweise über einen Splint befestigt ist. Durch die zweite Aussparung und/oder das Halteelement kann die innere Grillkammer und damit die erfindungsgemäße Grillvorrichtung somit auf besonders einfache Art und Weise erweitert werden, beispielsweise mit einer Flammenabschirmeinrichtung.

Vorzugsweise ist vorgesehen, dass an der äußeren Gehäusekammer ein Deckel zur teilweisen oder vollständigen Abdeckung der oberen Öffnung der inneren Grillkammer und/oder der äußeren Gehäusekammer schwenkbar angeordnet ist. Dabei kann der Deckel bevorzugt an zwei gegenüberliegenden Seiten der wannenförmigen äußeren Gehäusekammer angeordnet sein. Der Deckel kann dabei Instrumente zur Anzeige von Temperatur, Druck oder/oder Feuchtigkeit für Bereiche der inneren Grillkammer bzw. in Bereichen unterhalb des Deckels aufweisen. Über den schwenkbaren Deckel kann die obere Öffnung der inneren Grillkammer und/oder der äußeren Gehäusekammer somit besonders einfach von einem Benutzer teilweise oder vollständig abgedeckt werden, so dass ein Wärmeverlust während eines Grillvorgangs vorteilhaft vermieden wird. Die erfindungsgemäße Grillvorrichtung kann somit besonders energieeffizient betrieben werden. Ferner kann durch den an der äußeren Gehäusekammer angeordneten Deckel auch das Grillgut während eines Grillvorgangs vor Umgebungseinflüssen geschützt werden.

In einer bevorzugten Ausführungsform ist vorgesehen, dass der Deckel mindestens eine einen weiteren Zwischenraum aufweisende doppelwandige Wandung aufweist, wobei der weitere Zwischenraum bevorzugt mit einem Dämmmaterial gefüllt ist. Ein derartiges Dämmmaterial kann beispielsweise eine zur Hochtemperaturisolierung geeignete Mineralwolle sein, so dass die Temperatur unterhalb des Deckels durch das in der doppelwandigen Wandung angeordnete Dämmmaterial nicht nach außen geleitet wird. Selbstverständlich können im Rahmen der Erfindung vereinzelt auch bestimmte Bereiche des ersten und/oder des zweiten mit Luft durchströmbaren Zwischenraums mit Dämmmaterial gefüllt sein. Durch den die doppelwandige Wandung mit Dämmmaterial aufweisenden Deckel kann die erfindungsgemäße Grillvorrichtung besonders effizient und ressourcenschonend betrieben werden.

Optional ist vorgesehen, dass der Deckel mindestens einen Auslass zur Abführung eines Heißluftstroms aus der inneren Grillkammer und/oder äußeren Gehäusekammer und/oder aus dem mindestens einen ersten Zwischenraum aufweist. Der Auslass kann dabei beispielsweise als eine Bohrung oder als ein Schlitz ausgestaltet sein und sowohl an einem oberen Bereich, einem hinteren Bereich oder einem seitlichen Bereich des schwenkbaren Deckels angeordnet sein. Dabei kann der Auslass auch über einen Schließmechanismus verfügen, so dass der Auslass bei Bedarf verschlossen werden kann. Über den Auslass kann ein Heißluftstrom aus einem Bereich unterhalb des Deckels bzw. aus der inneren Grillkammer und/oder aus der äußeren Gehäusekammer abgeführt werden, so dass über den Auslass in vorteilhafter Weise die Temperatur in dem Bereich unterhalb des Deckels bzw. in der inneren Grillkammer reguliert werden kann. Wird beispielsweise für besondere Grillanwendungen eine kurzzeitig sehr hohe Temperatur benötigt, so kann der Auslass über den Verschließmechanismus verschlossen werden, so dass die Temperatur kurzzeitig in der inneren Grillkammer ansteigt und anschließend durch ein Öffnen des Auslasses durch den Verschließmechanismus wieder sinkt. Über den mindestens einen Auslass in dem schwenkbaren Deckel kann somit die Temperatur der erfindungsgemäßen Grillvorrichtung reguliert werden.

Optional ist vorgesehen, dass die äußere Gehäusekammer nach oben ragende Abschirmelemente aufweist. Derartige Abschirmelemente können beispielsweise an den seitlichen Bereichen und/oder an einem hinteren Bereich der äußeren Gehäusekammer angeordnet sein, so dass die äußere Gehäusekammer und die innere Grillkammer besonders vorteilhaft von Umgebungseinflüssen abgeschirmt werden.

Optional ist vorgesehen, dass die innere Grillkammer an einem oberen Randbereich mindestens einen nach innen ragenden Vorsprung und/oder eine Aussparung zur Auflage eines Rostes, einer Plancha und/oder einer Grillplatte aufweist. Der Rost, die Plancha und/oder die Grillplatte können dabei auf dem nach innen ragenden Vorsprung aufliegen, so dass diese besonders einfach von einem Benutzer beispielsweise zu Reinigungszwecken vorübergehend entfernt werden können. Additional oder alternativ können der Rost, die Plancha und/oder die Grillplatte auch über eine Aussparung im oberen Randbereich der inneren Grillkammer aufliegen, so dass diese beispielsweise über an diesen angeordneten Vorsprüngen oder Stiften in die Aussparung eingehängt werden können. Grundsätzlich können die Grillplatte und der Rost auch mehrteilig ausgebildet sein und sodann auf mehreren, nach innen ragenden, Vorsprüngen aufliegen. Selbstverständlich kann die erfindungsgemäße Grillvorrichtung auch eine Kombination aus mindestens einem nach innen ragenden Vorsprung und mindestens einer Aussparung aufweisen. Durch den mindestens einen nach innen ragenden Vorsprung und/oder die mindestens eine Aussparung können der Rost, die Plancha und/oder die Grillplatte somit auf besonders einfache Art und Weise in der erfindungsgemäßen Grillvorrichtung integriert werden und bei Bedarf besonders einfach entnommen und/oder ausgetauscht werden.

Optional ist vorgesehen, dass oberhalb und längs entlang eines Randbereiches der äußeren Gehäusekammer und/oder der inneren Grillkammer ein Heckbrenner angeordnet ist. Der Heckbrenner soll im Rahmen der vorliegenden Erfindung auch als ein Backburner verstanden werden und kann die innere Grillkammer zusätzlich oder alternativ zu der Brennervorrichtung hin mit Wärmeenergie versorgen. Durch die Anordnung des Heckbrenners kann somit ein besonders temperaturintensiver Grillvorgang längs entlang eines Randbereiches der äußeren Gehäusekammer erreicht werden, so dass das Grillgut, das diesem Bereich angeordnet ist, besonders vorteilhaft zusätzlich längsseitig mit Wärmeenergie versorgt wird.

In einer bevorzugten Ausführungsform ist vorgesehen, dass außerhalb der äußeren Gehäusekammer ein weitere Lüftungseinlässe aufweisendes Bedienpanel angeordnet ist. Das Bedienpanel kann an einer Vorderseite der Grillvorrichtung an einer dem Benutzer zugewandten Seite angeordnet sein und verschiedene Bedienelemente wie beispielsweise Drehregler und/oder Zündknöpfe aufweisen. Durch die Lüftungseinlässe wird eine hohe Temperatur, die in der inneren Grillkammer während eines Grillvorgangs vorherrscht, nur in geringem Maße an das Bedienpanel weitergegeben. Durch die Lüftungseinlässe an dem Bedienpanel kann dieses auf somit vorteilhafte Weise gekühlt werden, sodass für den Benutzer die Gefahr einer Verbrennung während des Grillvorgangs und kurz nach dem Grillvorgang vorteilhaft reduziert wird.

Gemäß einem weiteren Aspekt betrifft die Erfindung ein Grillsystem umfassend eine doppelwandige Grillvorrichtung, mindestens eine Brennervorrichtung und/oder mindestens einen Rost und/oder eine Plancha und/oder eine Flammenabschirmvorrichtung und/oder eine Grillplatte. Dabei ist die mindestens eine Brennervorrichtung innerhalb der inneren Grillkammer und unterhalb des Rostes und/oder der Plancha und/oder der Flammenabschirmvorrichtung und/oder der Grillplatte angeordnet und kann auf besonders einfache Art und Weise in die erfindungsgemäße Grillvorrichtung integriert werden. Je nach Anwendungsfall des Grillsystems kann das Grillgut auf dem Rost und/oder der Plancha und/oder im Bereich der Flammenabschirmvorrichtung, die auch als eine Aromaschiene ausgebildet sein kann, und/oder auf der Grillplatte angeordnet werden. Mittels des erfindungsgemäßen Grillsystems kann dem Grillgut auf verschiedene Arten thermische Energie zugeführt und somit besonders abwechslungsreich zubereitet werden. Ferner wird das erfindungsgemäße Grillsystem durch die erfindungsgemäße doppelwandige Grillvorrichtung besonders energieeffizient betrieben, so dass bei einem vergleichsweise geringen Energieaufwand ausreichend hohe Temperaturen erzeugt werden.

In einer bevorzugten Ausführungsform ist vorgesehen, dass das Grillsystem mindestens ein Bedienpanel zur Regelung mindestens einer Medienzufuhr aufweist. Unter Medienzufuhr ist im Rahmen der Erfindung bevorzugt die Zufuhr von einem Brennergas zu verstehen, so dass über das Bedienpanel die Menge an Brennergas, die dem Grillsystem und damit der Grillvorrichtung zugeführt wird, und insbesondere die Menge an Gas, die den in der Grillvorrichtung angeordneten Brennervorrichtungen zugeführt wird, geregelt wird. Das Bedienpanel kann dabei auch Instrumente beispielsweise zur Anzeige von Temperatur, Druck oder/oder Feuchtigkeit für Bereiche des Grillsystems aufweisen. Über das Bedienpanel kann die Medienzufuhr besonders vorteilhaft an den mit dem Grillsystem durchgeführten Grillvorgang angepasst werden, so dass das erfindungsgemäße Grillsystem besonderes energieeffizient betrieben werden kann.

Optional ist vorgesehen, dass das Grillsystem mindestens eine Aufnahmevorrichtung für ein Kabinett aufweist. Die Aufnahmevorrichtung für das Kabinett kann dabei bevorzugt in einem unteren Bereich des Grillsystems angeordnet werden und kann beispielsweise durch einen Vorsprung, einen Einsatz oder eine sonstige konstruktive Maßnahme ausgestaltet sein. Durch die Aufnahmevorrichtung kann das Grillsystem somit auf einfache Weise mit einem Kabinett verbunden werden.

Optional ist vorgesehen, dass unterhalb der Aufnahmevorrichtung mindestens ein Kabinett angeordnet ist. Das Kabinett kann dabei auch als eine Art Korpus und/oder Schrankmodul ausgestaltet sein und Rollen, Türen, Schubladen, Wände etc. aufweisen. Ferner kann das Kabinett zur Lagerung einer Medienquelle, beispielsweise einer Gasflasche, verwendet werden, welche beispielsweise durch Türen, die an dem Kabinett angeordnet sind, anschaulich verborgen wird. In dem Kabinett können weitere Grillutensilien, die im Zusammenhang mit der Nutzung des erfindungsgemäßen Grillsystems verwendet werden, vorteilhaft gelagert werden. Da das Kabinett unterhalb der Aufnahmevorrichtung und unterhalb der Grillvorrichtung angeordnet ist, kann die Grillvorrichtung über das Kabinett auf eine für einen Benutzer ergonomische Höhe positioniert werden.

Vorzugsweise weist das Grillsystem mindestens eine Medienverteileinrichtung mit mindestens zwei Konnektoren und einer Leitungseinrichtung auf, wobei die Medienverteileinrichtung mit einer Medienverteileinrichtung eines weiteren Systems über die mindestens zwei Konnektoren und die Leitungseinrichtung verbindbar ist. Ein Konnektor der Medienverteileinrichtung kann im Rahmen der Erfindung beispielsweise ein Stecker, eine Verbindungseinrichtung, eine Kupplung, ein Anschluss oder ein Ventil sein. Auch ein Schlauchverbinder oder ein Steckverbinder wird im Rahmen der Erfindung als ein Konnektor verstanden. Über einen Konnektor können Leitungseinrichtungen miteinander verbunden werden. Ferner kann der Konnektor insbesondere zwei aneinander angepasste Konnektorenteile umfassen, welche zur Etablierung einer mediendichten Verbindung miteinander verbindbar und besonders bevorzugt gegeneinander verriegelbar sind. Erfindungsgemäß kann dabei die Verbindung und Trennung der beiden Konnektorenteile werkzeuglos erfolgen, beispielsweise in Form einer federbelasteten Schnellkupplung. Ferner kann die Leitungseinrichtung der Medienverteileinrichtung beispielsweise ein Schlauch für ein Medium wie ein Fluid, wie insbesondere ein Gas, und zur Verteilung des mindestens einen Mediums zwischen den mindestens zwei Konnektoren ausgestaltet sein.

Über einen der mindestens zwei Konnektoren können mehrere Leitungseinrichtungen miteinander verbunden werden, ohne dass ein Verlust des Mediums in dem Bereich eines Konnektors auftritt. Mit anderen Worten: Der Konnektor ist ebenso wie die Leitungseinrichtung mediendicht ausgestaltet. Über die mindestens eine Medienverteileinrichtung wird das erfindungsgemäße Grillsystem somit auf besonders einfache Art und Weise mit dem Medium versorgt und kann das Medium besonders einfach weiterleiten.

Im Folgenden werden bevorzugte Ausführungsformen der erfindungsgemäßen doppelwandigen Grillvorrichtung und des erfindungsgemäßen System unter Bezugnahme auf die nachfolgenden Figuren näher erläutert.

Es zeigen:
- Fig. 1:: eine Explosionsdarstellung einer beispielhaften Ausführungsform einer erfindungsgemäßen doppelwandigen Grillvorrichtung,
- Fig. 2:: eine weitere schematische Darstellung der beispielhaften Ausführungsform einer doppelwandigen Grillvorrichtung gemäß Fig. 1,
- Fign. 3:: Schnittansichten einer beispielhaften Ausführungsform einer doppelwandigen Grillvorrichtung,
- Fig. 4:: eine schematische Darstellung einer beispielhaften Ausführungsform eines erfindungsgemäßen Grillsystems,
- Fig. 5:: eine weitere schematische Darstellung einer beispielhaften Ausführungsform eines erfindungsgemäßen Grillsystems.

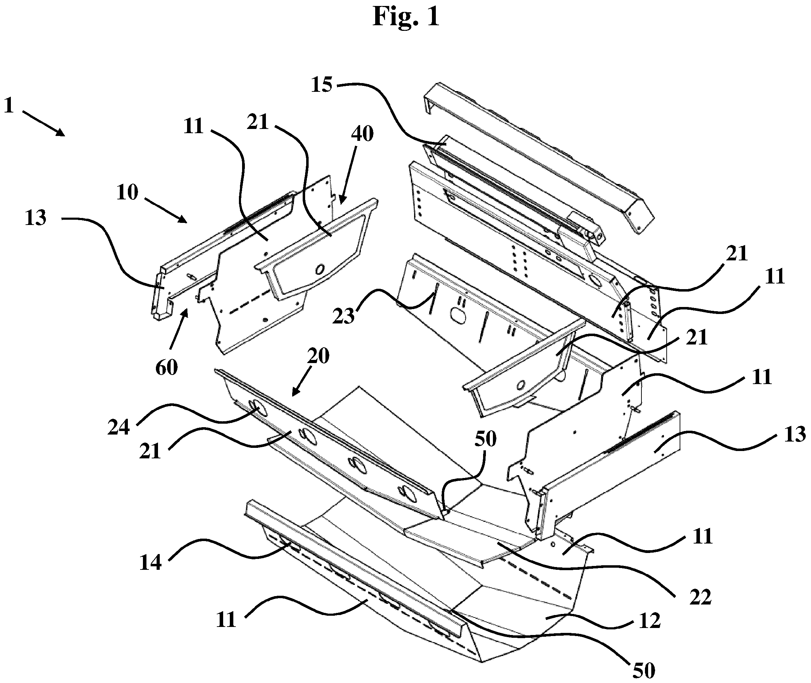

Figur 1 zeigt eine Explosionsdarstellung einer beispielhaften Ausführungsform einer erfindungsgemäßen doppelwandigen Grillvorrichtung 1 mit einer rechteckigen äußeren Gehäusekammer 10 und einer rechteckigen inneren Grillkammer 20. In der dargestellten Ausführungsform weist die äußere Gehäusekammer 10 vier äu-ßere Seitenelemente 11 sowie ein äußeres Bodenelement 12 auf, wobei die äußeren Seitenelemente 11 und das äußere Bodenelement 12 über Steckverbindungen miteinander verbindbar sind. Innerhalb der äußeren Gehäusekammer 10 ist die innere Grillkammer 20 angeordnet, die ebenfalls vier innere Seitenelemente 21 und ein inneres Bodenelement 22 aufweist. Auch die inneren Seitenelemente 21 und das innere Bodenelement 22 sind über Steckverbindungen miteinander verbindbar. Durch die Steckverbindungen können die Seitenelemente 11, 21 und/oder die Bodenelemente 12, 22 besonders einfach aus der erfindungsgemäßen Grillvorrichtung 1 gelöst werden, sodass der Austausch eines defekten Elements oder das Reinigen eines verschmutzten Elements besonders einfach erfolgen kann.

Zwischen der äußeren Gehäusekammer 10 und der inneren Grillkammer 20 ist ein erster, mit Luft durchströmbarer Zwischenraum 40 ausgebildet, wobei der erste Zwischenraum 40 sowohl zwischen den Seitenelementen 11, 21, als auch zwischen den Bodenelementen 12, 22 ausgebildet ist. Der Zwischenraum 40 fungiert als thermische Ioslationseinrichtung, so dass die Temperatur von der inneren Grillkammer 20 nur in geringem Maße an die äußere Gehäusekammer 10 übertragen wird. Eine vergleichsweise hohe Grilltemperatur wird somit in vorteilhafterweise innerhalb der inneren Grillkammer 20 gehalten, sodass die erfindungsgemäße Grillvorrichtung 1 besonders energiesparend betrieben werden kann. Ferner weist die äußere Gehäusekammer 10 eine vergleichsweise niedrige Temperatur auf, sodass gleichzeitig das Risiko einer Verbrennung bei Berührungen mit der äußeren Gehäusekammer 10 in vorteilhafterweise reduziert wird.

In der dargestellten Ausführungsform ist an der äußeren Gehäusekammer 10 ein zusätzliches und optionales Isolierteil 13 angeordnet. Zwischen dem Isolierteil 13 und der äußeren Gehäusekammer 10 ist ein zweiter, mit Luft durchströmbarer, Raum 60 gebildet. Vergleichbar mit dem ersten Luft durchströmbaren Raum 40 bildet auch der zweite mit Luft durchströmbare Raum 60 eine thermische Isoliereinrichtung, sodass die innere Grillkammer 20 zusätzlich thermisch isoliert wird. Das Isolierteil 13 wird beispielsweise durch Steckelemente mit der äußeren Gehäusekammer 10 verbunden, sodass das Isolierteil 13 bei Bedarf besonders einfach auszutauschen ist. Der erste und der zweite mit Luft durchströmbare Raum 40, 60 können alternativ oder ergänzend mit einem Dämmmaterial ganz oder teilweise befüllt werden, sodass je nach Bedarf die Isolierwirkung der erfindungsgemäßen doppelwandigen Grillkammer verstärkt werden kann.

Die vergleichsweise hohe Temperatur im Inneren der inneren Grillkammer 20 kann durch mindestens eine Brennervorrichtung 30 (in Fig. 1 nicht dargestellt) erzeugt werden. Diese kann auf besonders einfache Art und Weise über eine erste Öffnung 24 und eine erste Aussparung 23 im Bereich der inneren Grillkammer 20 angeordnet und dort festgelegt werden. Über eine zweite Öffnung 14 der äußeren Gehäusekammer 10 kann ein Ende der Brennervorrichtung 30 teilweise aus der äußeren Gehäusekammer 10 herausragen, sodass beispielweise über dieses Ende die Brennervorrichtung 30 mit einem Brennermedium, beispielsweise einem Brennergas, versorgt werden kann. Die Brennervorrichtung 30 ist dabei über die erste Aussparung 23 an der dem Benutzer abgewandten Seite festgelegt und über die erste Öffnung 24 an der dem Benutzer zugewandten Seite schwimmend gelagert. Die zweite Öffnung 14 und die erste Öffnung 24 sind dabei gegenüberliegend der Aussparung 23 angeordnet. Da die mindestens eine Brennervorrichtung 30 schwimmend gelagert ist, ist diese einerseits radial stabil in der Grillvorrichtung 1 angeordnet und andererseits mit einem ausreichenden axialen Spiel angeordnet, so dass die Brennervorrichtung auch durch eine werkstoffbedingte Ausdehnung bei höheren Temperaturen nicht in der Grillvorrichtung 1 verspannt. Ferner kann die Brennervorrichtung 30 durch die Aussparung 23 auf besonders einfache Art und Weise aus der Grillvorrichtung 1 entnommen werden, beispielsweise zu Reinigungs- und/oder Wartungszwecken.

In der dargestellten Ausführungsform weisen das innere Bodenelement 22 der inneren Grillkammer 20 und das äußere Bodenelement 12 der äußeren Gehäusekammer 10 jeweils eine Öffnung 50 auf. Diese ist als Auslass bzw. Abflussöffnung ausgestaltet, sodass dass beispielsweise Feuchtigkeit oder flüssige Rückstände, die während eines Grillvorgangs entstehen, aus der inneren Grillkammer 20 und/oder der äußeren Gehäusekammer 10 herausfließen können. Die Öffnungen 50 sind zudem annähernd fluchtend übereinander angeordnet, sodass die Rückstände besonders vorteilhaft abfließen können. Unterhalb der Öffnung 50 der äu-ßeren Gehäusekammer 10 kann zudem ein Behälter zur Ansammlung der flüssigen Grillrückstände angeordnet sein. Unerwünschte Rückstände werden somit nicht innerhalb der inneren Grillkammer 20 und/oder innerhalb der äußeren Gehäusekammer 10 der Grillvorrichtung 1 angesammelt. Um ein Abfließen der Rückstände zu begünstigen sind in der dargestellten Ausführungsform das innere Bodenelement 22 und das äußere Bodenelement 12 in Richtung der Öffnungen 50 abfallend geneigt. Durch die Abführung flüssigen Fettes aus der inneren Grillkammer 20 wird weiterhin auf vorteilhafte Weise ein möglicher Fettbrand verhindert. Die erfindungsgemäße Grillvorrichtung 1 wird somit auch bei intensiver Nutzung besonders vorteilhaft reingehalten.

In der dargestellten Ausführungsform ist oberhalb und längs entlang eines Randbereiches der äußeren Gehäusekammer 10 und der inneren Grillkammer 20 ein Heckbrenner 15 angeordnet. Durch die Anordnung des Heckbrenners 15 kann ein besonders temperaturintensiver Grillvorgang längs entlang eines Randbereiches der äußeren Gehäusekammer 10 erreicht werden, so dass das Grillgut, das diesem Bereich angeordnet ist, besonders vorteilhaft zusätzlich längsseitig mit Wärmeenergie versorgt wird. Der Heckbrenner 15 ist dabei in Richtung der inneren Grillkammer 20 geneigt, sodass die Wärmeenergie vorteilhaft unter einem Neigungswinkel auf das Grillgut strahlt. Es kann dabei vorgesehen sein, dass die Neigung des Heckbrenners 15 einstellbar ist, um die Wärmestrahlung gezielt und gleichzeitig flexibel auf das Grillgut zu richten.

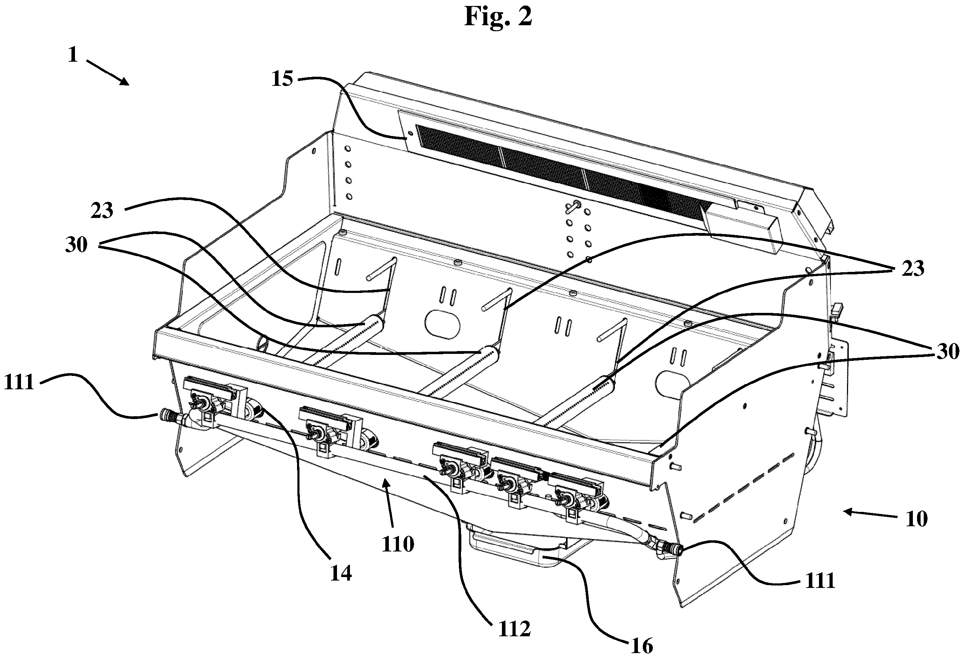

Figur 2 zeigt eine schematische Darstellung der beispielhaften Ausführungsform der doppelwandigen Grillvorrichtung gemäß Fig. 1, wobei an der dem Benutzer zugewandten Längsseite eine Medienverteileinrichtung 110 angeordnet ist. Die Medienverteileinrichtung 110 weist zwei Konnektoren 111 auf, über die die erfindungsgemäße doppelwandige Grillvorrichtung 1 beispielsweise ein Medium aufnehmen und weiterleiten kann. Das Medium wird zudem durch eine Leitungseinrichtung 112 zu den vier Brennervorrichtungen 30 geleitet. In der dargestellten Ausführungsform ist jede der vier Brennervorrichtungen 30 jeweils durch eine zweite Öffnung 14 der äußeren Gehäusekammer 10 angeordnet und in der erste Aussparung 23 der inneren Grillkammer arretiert. Bei der erfindungsgemäße Grillvorrichtung 1 können die Brennervorrichtungen 30 auf besonders einfache Art beispielsweise zu Reinigungszwecken entnommen werden.

Unterhalb der äußeren Gehäusekammer 10 ist ein als Fettschublade ausgestalteter Behälter 16 angeordnet, über den Rückstände, wie beispielweise flüssiges Fett, die während oder nach dem Grillvorgang aus der Öffnung 50 fließen, gesammelt werden können. Durch den Behälter 16 können unerwünschte Rückstände somit auf einfache Art aufgefangen werden, ohne die Grillvorrichtung 1 zu verschmutzen. Ferner wird durch das Auffangen durch den Behälter 16 eine Verschmutzung der Bereiche unterhalb der Grillvorrichtung 1 vermieden, sodass zusätzlicher Reinigungsaufwand dieser Bereiche vorteilhaft verringert wird.

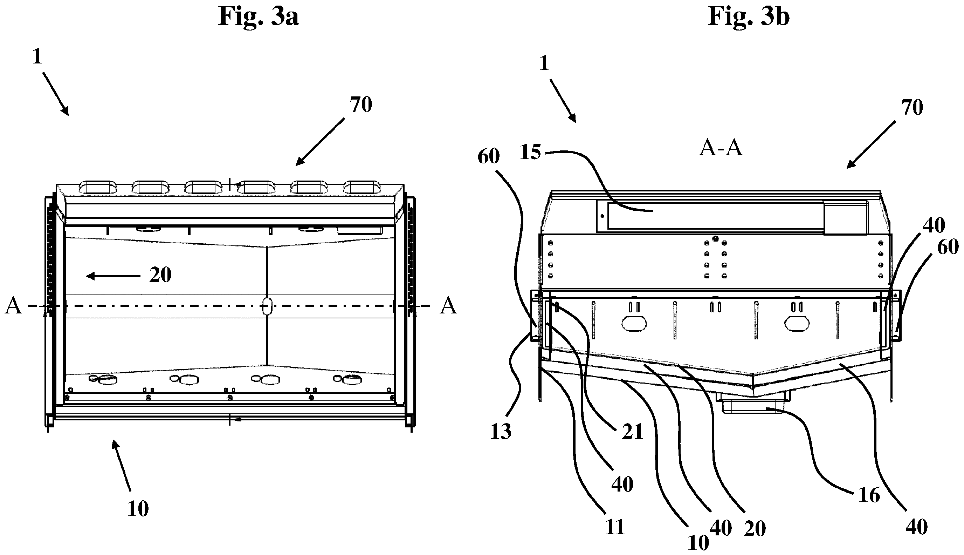

Figur 3 zeigt eine Schnittansicht einer beispielhaften Ausführungsform einer doppelwandigen Grillvorrichtung, wobei Fig. 3a eine Draufsicht von oben auf die doppelwandige Grillvorrichtung 1 mit geöffnetem Deckel 70 zeigt. Innerhalb der doppelwandigen Grillvorrichtung 1 ist die innere Grillkammer 20 und außerhalb die äußere Gehäusekammer 10 angeordnet. Ferner ist die Schnittebene A-A dargestellt, deren Anordnung parallel zu den Längsseiten sowie mittig der doppelwandigen Grillvorrichtung 1 erfolgt.

Die in Fig. 3b dargestellte Schnittansicht der Ebene A-A gemäß Fig. 3a zeigt eine Schnittansicht auf die doppelwandige Grillvorrichtung 1 aus der dem Benutzer zugewandten Vorderseite, sodass der Benutzer beispielsweise frontal dem Heckbrenner 15 zugewandt ist. Ferner ist aus dieser Ansicht die Anordnung des Behälters 16 unterhalb der äußeren Gehäusekammer 10 ersichtlich.

Aus der in Fig. 3b dargestellten Ansicht wird die Doppelwandigkeit der erfindungsgemäßen Grillvorrichtung 1 besonders deutlich: Zwischen dem inneren Seitenelement 21 der inneren Grillkammer 20 und dem äußeren Seitenelement 11 der äu-ßeren Gehäusekammer 10 ist ein erster, mit Luft durchströmbarer, Zwischenraum 40 angeordnet. Diese erste Zwischenraum 40 isoliert die innere Grillkammer 20 thermisch, sodass die erfindungsgemäße doppelwandige Grillvorrichtung 1 energieeffizient betrieben wird.

Zusätzlich ist in der dargestellten Ausführungsform ein Isolierteil 13 außerhalb des äußeren Seitenelements 11 der äußeren Gehäusekammer 10 angeordnet, wodurch ein zweiter, mit Luft durchströmbarer Zwischenraum, 60 ausgebildet wird. Der zuvor beschriebene isolierende und effizienzsteigernde Effekt des ersten Zwischenraums 40 wird durch den zweiten Zwischenraum 60 verstärkt, sodass die dargestellte Grillvorrichtung 1 besonders energieeffizient betrieben werden kann. Selbstverständlich können der erste und der zweite Zwischenraum 40, 60 auch an den Längsseiten sowie in Bereichen der Bodenelemente 12, 22 der Grillvorrichtung 1 angeordnet sein, sodass beispielsweise nahezu die gesamte innere Grillkammer von mit Luft durchströmbaren Zwischenräumen umgebend ist.

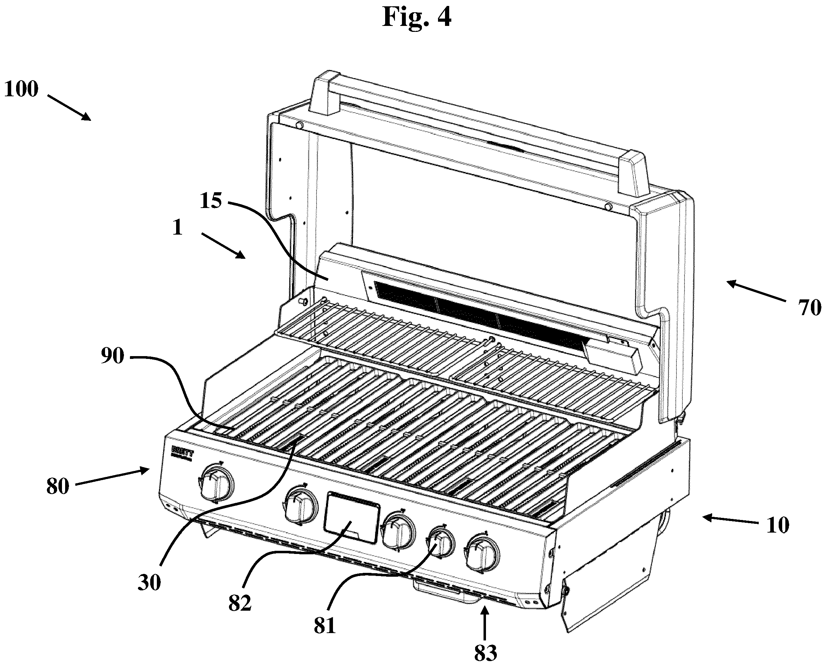

Figur 4 zeigt eine schematische Darstellung einer beispielhaften Ausführungsform eines erfindungsgemäßen Grillsystems 100. Das dargestellte Grillsystem 100 weist neben der erfindungsgemäßen Grillvorrichtung 1 einen an der äußeren Gehäusekammer 10 angeordneten schwenkbaren Deckel 70 zur teilweisen oder vollständigen Abdeckung der oberen Öffnung der inneren Grillkammer20 und der äußeren Gehäusekammer 10 auf.

Außerhalb der äußeren Gehäusekammer 10 ist an einer Längsseite der Grillvorrichtung 1 ein Bedienpanel 80 angeordnet, mittels dem die in der dargestellten Ausführungsform vier Brennervorrichtungen 30 separat über vier Regler bzw. Einstelleinrichtungen bedient werden. Zudem verfügt das dargestellte Bedienpanel 80 über einen zusätzlichen Regler 81 und über eine Displayanzeige 82 beispielsweise zur Anzeige der aktuellen Temperatur innerhalb der inneren Grillkammer oder zur Füllstandsanzeige einer Medienquelle. Ferner verfügt das Bedienpanel 80 über Lüftungseinlässe 83 im unteren Bereich, wodurch das Bedienpanel 80 in vorteilhafte Weise hinterlüftet wird, sodass für den Benutzer die Gefahr einer Verbrennung während des Grillvorgangs und kurz nach dem Grillvorgang vorteilhaft reduziert wird.

Oberhalb der Brennervorrichtungen 30 ist bei dem erfindungsgemäßen Grillsystem 100 ein Rost 90 ausgebildet, auf dem das Grillgut während des Grillvorgangs positioniert werden kann. Ferner verfügt das Grillsystem 100 über eine doppelwandige Grillvorrichtung 1 mit einem Heckbrenner 15, sodass dem Grillgut zusätzlich zu den Brennervorrichtungen 30 noch längsseitig weitere thermische Energie zugeführt werden kann.

Mittels des erfindungsgemäßen Grillsystems 100 kann dem Grillgut somit auf verschiedene Arten thermische Energie zugeführt und somit besonders abwechslungsreich zubereitet werden. Ferner wird das erfindungsgemäße Grillsystem 100 durch die erfindungsgemäße doppelwandige Grillvorrichtung 1 besonders energieeffizient betrieben, so dass bei einem vergleichsweise geringen Energieaufwand ausreichend hohe Temperaturen erzeugt werden.

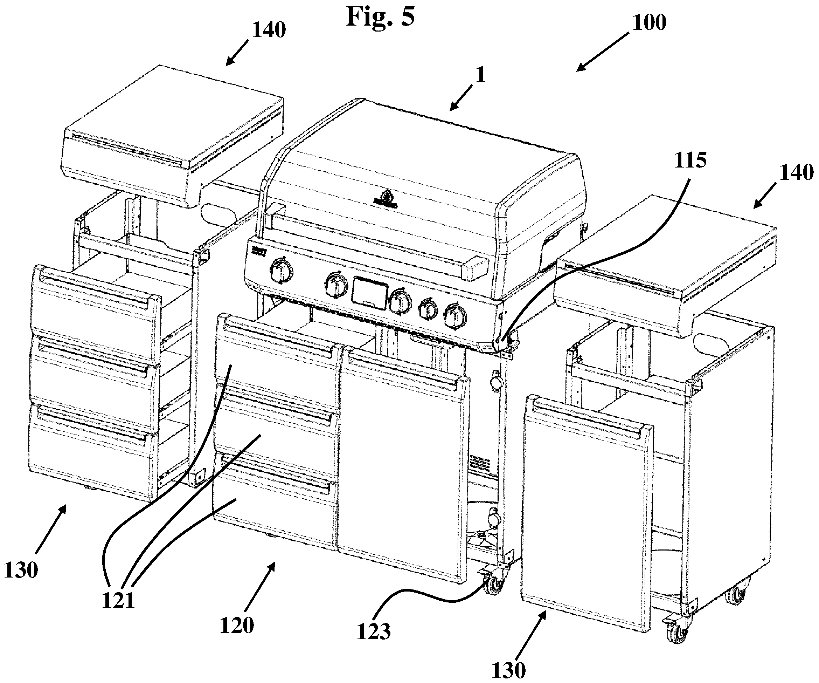

Figur 5 zeigt eine weitere schematische Darstellung einer beispielhaften Ausführungsform eines erfindungsgemäßen Grillsystems 100, wobei über eine Aufnahmevorrichtung 115 ein Kabinett 120 unterhalb der Grillvorrichtung 1 angeordnet ist. Die Aufnahmevorrichtung 115 ist dabei in einem unteren Bereich der Grillvorrichtung 1 angeordnet und als ein Vorsprung ausgestaltet.

In der dargestellten Ausführungsform ist das Kabinett 120 als ein Schrankmodul ausgestaltet, welches über mehrere ausziehbare Schubladen 121 und über im Bodenbereich angerordnete Rollen 123 verfügt, sodass das Kabinett 120 mit dem Grillsystem 100 besonders einfach verfahrbar ist. Die Schubladen 121 können einerseits zur Lagerung einer Medienquellen, beispielsweise einer Gasflasche, sodass diese anschaulich verborgen wird, oder andererseits zur Aufbewahrung von Grillutensilien verwendet werden, sodass diese stets für den Benutzer griffbereit sind.

Ferner ist in der dargestellten Ausführungsform je ein Zusatzkabinett 130 seitlich an dem Kabinett 120 angeordnet, welches beispielsweise als ein Kühlschrank-Kabinett zur Lagerung von Grillgut oder von Getränken verwendet werden kann. Oberhalb eines jeden Zusatzkabinetts 130 ist ein weiteres Zusatzmodul 140 angeordnet. Dieses kann beispielsweise über die Medienverteileinrichtung 110 (nicht dargestellt) der Grillvorrichtung 1 des Grillsystem 100 ebenfalls mit dem Medium versorgt werden und beispielsweise als ein Kochmodul, Keramikbrennermodul, Wokmodul, etc. ausgestaltet sein.

Die dargestellte Ausführungsform des erfindungsgemäßes Grillsystems 100 bietet somit neben dem energieeffizienten Betrieb der Grillvorrichtung 1 auch die Möglichkeit der Lagerung von Grillutensilien und die Option von modularen Erweiterungen über Zusatzkabinetts 130 und Zusatzmodule 140, sodass das Grillsystem 100 besonders vorteilhaft betrieben werden kann.

### Bezugszeichenliste

- 1: doppelwandige Grillvorrichtung
- 10: äußere Gehäusekammer
- 11: äußeres Seitenelement
- 12: äußeres Bodenelement
- 13: Isolierteil
- 14: zweite Öffnung
- 15: Heckbrenner
- 16: Behälter
- 20: innere Grillkammer
- 21: inneres Seitenelement
- 22: inneres Bodenelement
- 23: erste Aussparung
- 24: erste Öffnung
- 30: Brennervorrichtung
- 40: erster Zwischenraum
- 50: Öffnung
- 60: zweiter Zwischenraum
- 70: Deckel
- 80: Bedienpanel
- 90: Rost
- 100: Grillsystem
- 110: Medienverteileinrichtung
- 111: Konnektor
- 112: Leitungseinrichtung
- 115: Aufnahmevorrichtung
- 120: Kabinett
- 130: Zusatzkabinett
- 140: Zusatzmodul

## Patentansprüche

1. Doppelwandige Grillvorrichtung (1) mit:
- einer nach oben geöffneten wannenförmigen äußeren Gehäusekammer (10); und
- einer nach oben geöffneten wannenförmigen inneren Grillkammer (20);
wobei die innere Grillkammer (20) zur Aufnahme mindestens einer Brennervorrichtung (30) ausgestaltet und die innere Grillkammer (20) zur Anordnung innerhalb der äußeren Gehäusekammer (10) ausgebildet ist; und
wobei bei Anordnung der inneren Grillkammer (20) innerhalb der äußeren Gehäusekammer (10) mindestens ein erster, mit Luft durchströmbarer, Zwischenraum (40) zwischen der inneren Grillkammer (20) und der äußeren Gehäusekammer (10) ausgebildet ist.

2. Doppelwandige Grillvorrichtung nach Anspruch 1, **dadurch gekennzeichnet, dass** die äußere Gehäusekammer (10) mindestens ein äußeres Seitenelement (11) und mindestens ein äußeres Bodenelement (12) umfasst und/oder dass die innere Grillkammer (20) mindestens ein inneres Seitenelement (21) und mindestens ein inneres Bodenelement (22) umfasst.

3. Doppelwandige Grillvorrichtung nach Anspruch 2, **dadurch gekennzeichnet, dass** das äußere Seitenelement (11) mit dem äußeren Bodenelement (12) verbindbar ist und/oder dass das innere Seitenelement (21) mit dem inneren Bodenelement (22) verbindbar ist.

4. Doppelwandige Grillvorrichtung nach einem der vorigen Ansprüche, **dadurch gekennzeichnet, dass** die äußere Gehäusekammer (10) mindestens einen Lüftungseinlass zur Zuführung von Kaltluft in den ersten Zwischenraum (40) aufweist.

5. Doppelwandige Grillvorrichtung nach einem der Ansprüche 2 bis 4, **dadurch gekennzeichnet, dass** die äußere Gehäusekammer (10) an dem äußeren Bodenelement (12) und/oder die innere Grillkammer (20) an dem inneren Bodenelement (22) mindestens eine Öffnung (50), insbesondere mindestens eine Auslassöffnung, aufweisen.

6. Doppelwandige Grillvorrichtung nach einem der Ansprüche 2 bis 5, **dadurch gekennzeichnet, dass** das innere Seitenelement (21) und/oder das innere Bodenelement (22) mehrere Wandelemente aufweisen/aufweist, über die die innere Grillkammer (20) in der äußeren Gehäusekammer (10) beabstandet lagerbar ist.

7. Doppelwandige Grillvorrichtung nach einem der vorigen Ansprüche, **dadurch gekennzeichnet, dass** die äußere Gehäusekammer (10) und/oder die innere Grillkammer (20) einen in vertikaler Richtung nach oben größer werdenden Grillkammerraum umschließen.

8. Doppelwandige Grillvorrichtung nach einem der vorigen Ansprüche, **dadurch gekennzeichnet, dass** an der äußeren Gehäusekammer (10) mindestens ein Isolierteil (13) angeordnet ist, wobei zwischen dem mindestens einen Isolierteil (13) und der äußeren Gehäusekammer (10) mindestens ein zweiter, mit Luft durchströmbarer, Zwischenraum (60) ausgebildet ist.

9. Doppelwandige Grillvorrichtung nach einem der Ansprüche 2 bis 8, **dadurch gekennzeichnet, dass** das innere Bodenelement (22) von einem Mittelbereich in Richtung des inneren Seitenelements (21) ansteigend angeordnet ist und/oder das äußere Bodenelement (12) von einem Mittelbereich in Richtung des äußeren Seitenelements (11) ansteigend angeordnet ist.

10. Doppelwandige Grillvorrichtung nach einem der vorigen Ansprüche, **dadurch gekennzeichnet, dass** die innere Grillkammer (20) mindestens eine erste Aussparung (23) zur Festlegung und mindestens eine erste Öffnung (24) zur schwimmenden Lagerung mindestens einer Brennervorrichtung (30) aufweist, wobei die mindestens eine erste Aussparung (23) und die mindestens eine erste Öffnung (24) gegenüberliegend angeordnet sind.

11. Doppelwandige Grillvorrichtung nach einem der vorigen Ansprüche, **dadurch gekennzeichnet, dass** die äußere Gehäusekammer (10) mindestens eine zweite Öffnung (14) aufweist, wobei die mindestens eine zweite Öffnung (14) bevorzugt an die mindestens eine erste Öffnung (24) zur schwimmenden Lagerung der mindestens einen Brennervorrichtung (30) der inneren Wandung angepasst ist.

12. Doppelwandige Grillvorrichtung nach einem der vorigen Ansprüche, **dadurch gekennzeichnet, dass** an der äußeren Gehäusekammer (10) ein Deckel (70) zur teilweisen oder vollständigen Abdeckung der oberen Öffnung der inneren Grillkammer (20) und/oder der äußeren Gehäusekammer (10) schwenkbar angeordnet ist.

13. Doppelwandige Grillvorrichtung nach einem der vorigen Ansprüche, **dadurch gekennzeichnet, dass** der Deckel (70) mindestens eine einen weiteren Zwischenraum aufweisende doppelwandige Wandung aufweist, wobei der weitere Zwischenraum bevorzugt mit einem Dämmmaterial gefüllt ist.

14. Doppelwandige Grillvorrichtung nach einem der vorigen Ansprüche, **dadurch gekennzeichnet, dass** außerhalb der äußeren Gehäusekammer (10) ein weitere Lüftungseinlässe aufweisendes Bedienpanel (80) angeordnet ist.

15. Grillsystem (100) umfassend:
- eine doppelwandige Grillvorrichtung (1) nach einem der Ansprüche 1 bis 14 und
- mindestens eine Brennervorrichtung (30) und/oder
- mindestens einen Rost (90) und/oder eine Plancha und/oder eine Flammenabschirmvorrichtung und/oder eine Grillplatte.

16. Grillsystem nach Anspruch 15, **dadurch gekennzeichnet, dass** das Grillsystem mindestens ein Bedienpanel (80) zur Regelung mindestens einer Medienzufuhr aufweist.

17. Grillsystem nach einem der vorigen Ansprüche, **dadurch gekennzeichnet, dass** das Grillsystem mindestens eine Medienverteileinrichtung (110) mit mindestens zwei Konnektoren (111) und einer Leitungseinrichtung (112) aufweist,
wobei die Medienverteileinrichtung (110) mit einer Medienverteileinrichtung (110) eines weiteren Systems über die mindestens zwei Konnektoren (111) und die Leitungseinrichtung (112) verbindbar ist.
